# EUROPÄISCHE PATENTSCHRIFT

(11) **EP 1 316 165 B1**
(45) Veröffentlichungstag und Bekanntmachung des Hinweises auf die Patenterteilung: **04.07.2007**
(21) Anmeldenummer: 01974006.7
(22) Anmeldetag: 29.08.2001
(51) Int. Cl.: H04B 10/10, G02B 6/28

(54) **OPTISCHER MODIFIZIERER UND VERFAHREN ZUR HERSTELLUNG HIERFÜR**
OPTICAL MODIFIER AND METHOD FOR PRODUCING THE SAME
MODIFICATEUR OPTIQUE ET SON PROCEDE DE PRODUCTION

(30) Priorität: 05.09.2000 DE 10043985
(43) Veröffentlichungstag der Anmeldung: 04.06.2003
(73) Patentinhaber: Cube Optics AG, 55129 Mainz (DE)
(72) Erfinder: SMAGLINSKI, Ingo, 55122 Mainz (DE)
(74) Vertreter: Weber, Roland
(86) Internationale Anmeldenummer: PCT/DE2001/003393
(87) Internationale Veröffentlichungsnummer: WO 2002/021733

(56) Entgegenhaltungen:
- EP-A- 1 004 907
- WO-A-96/22177
- CH-A- 637 221
- US-A- 4 441 784
- US-A- 4 699 453
- US-A- 4 701 010

## Beschreibung

Die vorliegende Erfindung betrifft einen optischen Modifizierer, z.B. zum Ein- oder Auskoppeln von Signalen einzelner oder mehrerer Wellenlängenkanäle in oder aus Wellenleitern sowie ein Verfahren zur Herstellung hierfür.

Insbesondere in der Tele- und Datenkommunikation ist es mittlerweile üblich, Informationen optisch, das heißt z.B. über Lichtleiter, zu übertragen. Lichtleiter sind im allgemeinen dünne Fasern aus hochtransparenten optischen Materialien, die Licht in ihrer Längsrichtung durch vielfache Totalreflexion leiten. Das im allgemeinen über eine glatte Eingangsfläche eintretende Licht folgt allen Biegungen der Faser und tritt am Ende aus einer im allgemeinen ebenfalls glatten Endfläche wieder aus. Die elektrischen Signale, die übertragen werden sollen, werden nach geeigneter Modulation durch einen elektrooptischen Wandler in Lichtsignale - meist im Infrarotbereich - umgewandelt, in den Lichtwellenleiter eingekoppelt, vom Lichtwellenleiter übertragen und am Ende durch einen optoelektrischen Wandler in elektrische Signale zurückverwandelt. Um die Übertragungsrate der Lichtwellenleiter zu erhöhen, ist es mittlerweile üblich, mehrere unterschiedliche Nachrichtensignale gleichzeitig über einen Lichtwellenleiter zu übertragen. Dazu werden die Nachrichtensignale moduliert. Für die unterschiedlichen Nachrichtensignale werden jeweils unterschiedliche Trägerfrequenzen verwendet, wobei die einzelnen diskreten Frequenzkomponenten des gesamten übertragenen Signals oftmals auch als Kanäle bezeichnet werden. Nach der Übertragung der einzelnen Nachrichtensignale bzw. Wellenlängenkanäle über den Lichtwellenleiter müssen die einzelnen Signale getrennt und demoduliert werden.

In der Technik sind daher Vorrichtungen zum Addieren und Selektieren von wellenlängencodierten Signalen (Licht einer spezifischen Wellenlänge oder spezifischen Wellenlängen) sogenannte Multiplexer- oder Demultiplexer-Anordnungen bekannt. Solche Vorrichtungen verwenden optische Fasern, die eine große Informationsträgerdichte aufweisen. Zweck der Vorrichtungen ist es, aus der Vielzahl von übertragenen Informationen eine entsprechende Informationen bzw. einen entsprechenden Wellenlängenkanal abzutrennen. Für diese Abtrennung kommen beispielsweise Schmalbandspiegel in Frage, die bestimmte Frequenzen des Lichts nahezu ungehindert passieren lassen, während ausgewählte Frequenzen reflektiert werden. Beim Austritt des Lichts aus der Glasfaser kommt es zwangsläufig jedoch zu einer Strahlaufweitung, die dazu führt, daß entweder die Intensität am Bildungspunkt, das heißt an dem Punkt, an dem das gefilterte Licht ausgewertet wird, deutlich reduziert wird, oder die Verwendung von entsprechenden Linsensystemen, z. B. Gradientenindexlinsen (GRIN-Linsen), notwendig ist, um das Licht auf den entsprechenden Abbildungspunkt zu kolimieren.

Die Ausführungsform mit den Linsen hat jedoch den Nachteil, daß diese zum einen recht teuer sind, zum anderen eine sehr genaue Justierung notwendig ist und überdies die abbildenden Eigenschaften auch noch wellenlängenabhängig sind. Diese Justierung muß zumeist aufwendig von Hand vorgenommen werden, da der Kerndurchmesser z. B. der optischen Single-Mode-Fasern nur 9 µm beträgt. Die bekannten Multiplexer/Demultiplexer-Anordnungen nehmen zudem sehr viel Platz ein, was sich in entsprechend geräumigen Ausführungen der jeweiligen optischen Komponenten niederschlägt. Ursache dafür ist neben der geometrischen Ausdehnung des Linsensystems die inhärente Eigenschaft von Glasfasern, nicht beliebig umgelenkt bzw. gebogen werden zu können. So ist es beispielsweise nicht möglich, Glasfasern mit einem kleineren Radius als etwa 20 bis 30 mm zu biegen, da dann die Verluste zu hoch werden, weil teilweise die Bedingungen für Totalreflexionen nicht mehr erfüllt werden. Es müssen daher entsprechend große Umlenkschlaufen gelegt werden, die aber in den optischen Geräten einen nicht unerheblichen Platz einnehmen.

In der US 4,699,453 ist ein faseroptischer Koppler beschrieben mit einer inneren reflektierenden Fläche. Dieser optische Koppler wird als Kunstoff-Spritzgussteil hergestellt.

Es besteht ein Bedarf an einem optischen Modifizierer, der gezielt einen oder mehrere Wellenlängenkanäle beeinflussen kann, der kostengünstig herzustellen ist, der auf engstem Raum ein möglichst verlustarmes Ein- bzw. Auskoppeln von Licht erlaubt und wobei gleichzeitig der optische Modifizierer leicht zu justieren ist.

Diese Aufgabe wird erfindungsgemäß durch einen optischen Modifizierer gemäß Anspruch 1 und durch ein Herstellungsverfahren gemäß Anspruch 17 gelöst.

Unter einem wellenmodifizierenden Element wird jegliches Element verstanden, das, in den Strahlengang gestellt, einen, mehrere oder sogar sämtliche Wellenlängenkanäle des optischen Kanals beeinflußt. Unter Beeinflussen wird beispielsweise Reflektieren, Absorbieren, Verstärken, Abschwächen, Unterbrechen oder Polarisieren verstanden.

Die Koppelvorrichtung dient zum Ein- bzw. Auskoppeln von Signalen beispielsweise in oder aus Glasfasern. Dadurch, daß eine reflektierende Fläche vorgesehen ist, die gekrümmt ist, kann auf die Linsenoptik verzichtet werden, da die am Ende einer Glasfaser auftretende Strahlaufweitung durch die gekrümmte Fläche zumindest zum Teil kompensiert wird.

Dabei ist eine Ausführungsform besonders bevorzugt, bei der ein Schnitt durch die gekrümmte Fläche der Koppelvorrichtung in etwa einem Abschnitt einer Parabel, einer Hyperbel oder einer Ellipse entspricht. Mit anderen Worten sind alle Kurven zweiter Ordnung der Ebene, die oft auch als Kegelschnitte bezeichnet werden, abgesehen von einer Geraden als Profil für die gekrümmte Fläche besonders geeignet. Die reflektierende Fläche ist derart gekrümmt, daß sie einem Abschnitt einer gedachten Kurve zweiter Ordnung der Ebene folgt. Diese Formen haben besonders gute abbildende Eigenschaften, so daß sie für die Verwendung in einer Koppelvorrichtung besonders geeignet sind. So wird beispielsweise ein sich im Brennpunkt einer Ellipse aufweitender Strahl, der an der Ellipse reflektiert wird, in den anderen Brennpunkt der Ellipse abgebildet. Somit steht die gesamte an dem ersten Brennpunkt austretende Lichtmenge an dem anderen Brennpunkt nahezu punktförmig zur Verfügung. Andererseits wird ein sich im Brennpunkt einer Parabel aufweitender Strahl an der Parabel derart reflektiert, daß das reflektierte Licht im wesentlichen parallel ist. Dieses parallele Licht kann nun verwendet werden, um auf das Licht modifizierende Element zu treffen. Dadurch, daß das Licht im wesentlichen parallel verläuft, ist gewährleistet, daß das Licht modifizierende Element nahezu ohne Verluste alle Nachrichtensignale empfängt.

Eine besonders zweckmäßige Ausführungsform sieht vor, daß die reflektierende Fläche der Koppelvorrichtung in etwa die Form eines Abschnitts eines Rotationsparaboloiden, eines Rotationsellipsoiden oder eines Rotationshyperboloiden hat. Mit anderen Worten folgt die reflektierende Fläche zumindest stückweise der Außenfläche eines Rotationskörpers. Dies führt dazu, daß ein Schnitt durch die reflektierende Fläche entlang einer Schnittfläche senkrecht zur Rotationsachse etwa eine Kreisabschnittsform hat, während ein Schnitt entlang einer Ebene, in der die Rotationsachse liegt, in etwa die Form eines Abschnitts einer Parabel, Hyperbel oder Ellipse aufweist. Eine solche gekrümmte reflektierende Fläche hat besonders geeignete abbildende Eigenschaften, so daß die Verluste, die durch das Aus- bzw. Einkoppeln entstehen, sehr gering sind und die Verwendung einer Kolimationsoptik nicht nötig ist.

Um besonders gute Abbildungseigenschaften zu erhalten, ist es von Vorteil, wenn zumindest ein Sende- oder Empfangselement in der Nähe eines Brennpunktes der reflektierenden Fläche angeordnet ist. Unter einem Sende- oder Empfangselement werden alle Licht verarbeitenden Systeme verstanden, wie z.B. die Endflächen von Glasfasern und Lichtwellenleitern sowie abbildende Systeme, wie z.B. Linsen, Gradientenindexstrukturen oder Spiegeloptiken, aber auch Licht emittierende Strukturen, wie beispielsweise LEDs oder Laser, oder Licht empfangende Strukturen, wie beispielsweise Photodioden oder elektrooptische Wandler. Die Brennpunkte der gekrümmten Flächen entsprechen den Brennpunkten der gedachten Hyperbel, Parabel oder Ellipse, der die reflektierende Fläche folgt.

So ist beispielsweise eine Parabel als die Menge der Punkte definiert, die von einem festen Punkt, dem sogenannten Brennpunkt, und einer festen Geraden, der sogenannten Leitlinie, gleich weit entfernt sind. Fällt paralleles Licht parallel zur Rotationsachse auf einen Parabolspiegel, so werden alle Lichtstrahlen in einen Punkt, den Brennpunkt, abgebildet. Daher kann der Brennpunkt auch unabhängig von der mathematischen Konstruktion ermittelt werden.

Analog dazu ist die Hyperbel als die Menge aller Punkte definiert, für die die Differenz der Abstände von zwei gegebenen festen Punkten, den sogenannten Brennpunkten, konstant ist. Und schließlich ist die Ellipse als die Menge aller Punkte definiert, für die die Summe der Abstände von zwei gegebenen festen Punkten, den sogenannten Brennpunkten, konstant ist.

Folgt beispielsweise das Profil der gekrümmten reflektierenden Fläche der Form einer gedachten Parabel und ist das Ende eines Sendeelementes, z.B. eine Glasfaser, in der Nähe des Brennpunktes der gedachten Parabel angeordnet, so werden die von der Glasfaser ausgehenden Lichtstrahlen an der parabelförmigen gekrümmten Fläche derart reflektiert, daß die reflektierten Lichtstrahlen im wesentlichen parallel zueinander verlaufen.

Es soll hier betont werden, daß die Koppelvorrichtung sowohl zum Ein- als auch zum Auskoppeln von Licht in entsprechende Licht führende Elemente geeignet ist. So kann beispielsweise die Koppelvorrichtung mit einem Profil der gekrümmten reflektierenden Fläche in Form einer gedachten Parabel auch verwendet werden, um paralleles Licht, das auf die gekrümmte reflektierende Fläche fällt, in den Brennpunkt abzubilden. Mit anderen Worten wird alles Licht, das im richtigen Winkel parallel auf die reflektierende Fläche fällt, in einer sich in der Nähe des Brennpunktes der gedachten Parabel befindlichen Glasfaser eingekoppelt.

Um die Justierung beispielsweise einer Glasfaser in der Nähe des Brennpunktes der gekrümmten Fläche zu erleichtern, weist der optische Modifizierer bevorzugt mindestens einen Anschlag für die Justierung eines Sende- oder Empfangselements vor. Dieser Anschlag kann beispielsweise durch eine ebene Fläche verwirklicht werden, auf der der Brennpunkt der gekrümmten Fläche liegt. Dadurch muß die Glasfaser-lediglich auf die ebene Fläche aufgelegt werden, um eine exakte Justierung der Glasfaser in eine Richtung zu erleichtern. Bevorzugt sind aber Ausführungsformen, bei denen der Anschlag eine Justierung zumindest in zwei Richtungen oder, besonders bevorzugt, sogar in drei Richtungen erlaubt.

Es soll an dieser Stelle betont werden, daß der mindestens eine Anschlag nicht notwendigerweise eine ebene Fläche sein muß. Beispielsweise dann, wenn die zentrale Achse des von einem Sende- oder Empfangselement ausgehender Lichtstrahl nicht senkrecht zur Rotationsachse der gekrümmten Fläche ausgerichtet ist, kann der Anschlag mit Vorteil als Kegelmantelfläche ausgebildet sein.

Vorzugsweise ist der Anschlag einstückig mit der reflektierenden Fläche ausgebildet. Durch die einstückige Ausbildung ist eine Justierung des Anschlags in Bezug auf die reflektierende Fläche nicht notwendig. Es muß vielmehr lediglich bei der Herstellung auf eine entsprechend genaue Anordnung des Anschlags geachtet werden.

Eine besonders zweckmäßige Ausführungsform des optischen Modifizierers sieht mindestens einen Ein- und einen Ausgang vor, wobei mindestens zwei Koppelvorrichtungen derart angeordnet sind, daß elektromagnetische Wellen, die am Eingang in den optischen Modifizierer eintreten, zunächst an der ersten Koppelvorrichtung reflektiert werden, dann das wellenmodifizierende Element passieren und schließlich an der zweiten Koppelvorrichtung zum Ausgang reflektiert werden. Diese Anordnung ist von großem Vorteil, da sie beispielsweise verwendet werden kann, um Licht aus einer Glasfaser über die erste Koppelvorrichtung auszukoppeln, mit Hilfe des wellenmodifizierenden Elements zu modifizieren, beispielsweise einen Wellenlängenkanal auszufiltem, und mit Hilfe der zweiten Koppelvorrichtung in eine weitere Glasfaser wieder einzukoppeln. Diese Anordnung benötigt keine zusätzliche Kollimatoroptik. Durch die reflektierenden gekrümmten Flächen wird eine optimale wellenlängenunabhängige Abbildung gewährleistet.

Die Anordnung ist daher für einen sehr breiten Wellenlängenbereich nutzbar. Überdies ist es beispielsweise möglich, zur einfachen optimalen Justierung der Glasfasern die Justierung mit einer anderen Wellenlänge, z.B. mit sichtbarem Licht, durchzuführen. Dadurch, daß der Strahlenverlauf für die justierende Person sichtbar ist, kann die Justierung leicht vorgenommen werden. Nach erfolgter Justierung kann selbstverständlich mit dem optischen Modifizierer Licht von völlig anderen Wellenlängen reflektiert werden, ohne daß eine Neujustierung notwendig ist.

Eine besonders bevorzugte Ausführungsform sieht vor, daß das wellenmodifizierende Element ein Frequenzbandspiegel ist, welcher die elektromagnetischen Wellen zumindest in einem bestimmten Frequenzintervall reflektiert. Es ist daher beispielsweise möglich, die ankommenden optischen Signale über eine erste Koppelvorrichtung auf den Frequenzbandspiegel abzubilden, der wiederum zumindest einen Teil der Wellenlängenkanäle entweder direkt auf eine weitere Glasfaser oder erst auf eine zweite Koppelvorrichtung abbildet, die wiederum für die Einkopplung des Lichts in die rückführende Glasfaser sorgt. Mit Hilfe dieser Anordnung kann ein oder mehrere Wellenlängenkanäle aus den optischen Signalen selektiert werden.

Mit Vorteil ist der Frequenzbandspiegel derart ausgestaltet, daß elektromagnetische Wellen mit einer Frequenz außerhalb eines bestimmten Frequenzintervalls transmittieren. Dann kann vorzugsweise eine dritte Koppelvorrichtung vorgesehen sein, wobei das von einer ersten Glasfaser kommende Licht über eine erste Koppelvorrichtung auf den Frequenzbandspiegel abgebildet wird, der wiederum einen Teil der Wellenlängenkanäle reflektiert, während er einen anderen Teil der Wellenlängenkanäle passieren läßt, so daß die reflektierten Wellenlängenkanäle über eine zweite Koppelvorrichtung in eine erste wegführende Glasfaser eingekoppelt werden und die transmittierten Wellenlängenkanäle über eine dritte Koppelvorrichtung in eine zweite wegführende Glasfaser eingekoppelt werden. Mit Vorteil wird ein Frequenzbandspiegel bzw. -filter verwendet, eine Wellenlänge oder ein Wellenlängenband durchläßt und alle anderen Wellenlängen reflektiert.

Es versteht sich, daß alle hier beschriebenen Anordnungen immer in beide Richtungen verwendet werden können. So kann das beschriebene Beispiel mit drei Koppelvorrichtungen und dem Frequenzbandspiegel auch verwendet werden, um zwei unterschiedliche Signale unterschiedlicher Wellenlängenkanäle, die jeweils über eine getrennte Glasfaser transportiert werden, in eine gemeinsame Glasfaser einzukoppeln.

Besonders bevorzugt ist eine Ausführungsform, bei der das wellenmodifizierende Element ein Filter ist. Prinzipiell kommen alle Licht filternden Elemente in Frage, besonders bevorzugt sind jedoch Graufilter, Farbfilter, Polarisationsfilter oder eine optische Diode bzw. ein optischer Isolator.

Ein Graufilter schwächt beispielsweise alle Lichtstrahlen beliebiger Frequenz, die durch ihn hindurchlaufen, ab. Insbesondere dann, wenn die einzelnen Wellenlängenkanäle eine stark unterschiedliche Intensität aufweisen, kann die Verwendung eines Graufilters nach einem Demultiplexer von Vorteil sein, um diejenigen Wellenlängenkanäle hoher Intensität etwas abzuschwächen.

Ein Farbfilter ist in der Lage, Lichtstrahlen einer bestimmten Frequenz oder bestimmten Frequenzen zu filtern bzw. auszulöschen.

Ein Polarisationsfilter erlaubt nur Lichtstrahlen in einer bestimmten Polarisationsebene zu passieren.

Eine optische Diode läßt Lichtstrahlen lediglich in einer Richtung passieren, während sie in der anderen Richtung keine Lichtstrahlen passieren läßt. Eine optische Diode kann beispielsweise durch zwei Polarisationsfilter verwirklicht werden, deren Polarisationsfilterebenen z. B. etwa um 45° verkippt sind und zwischen denen sich ein in Strahlrichtung magnetisiertes Medium (magnetooptisches Medium) befindet. Durchläuft der Lichtstrahl das entsprechend magnetisierte Medium, so kommt es zu einer Drehung der Polarisationsebene des Lichts aufgrund des Faraday-Effektes beispielsweise um etwa 45°. Da die Drehrichtung mit dem Vorzeichen der Magnetisierung wechselt, aber unabhängig von der Fortpflänzungsrichtung des Lichts ist, stellt die Anordnung ein nicht reziprokes Bauelement dar, das in der einen Richtung keinerlei Licht passieren läßt, da dann die Polarisationsebene des durch den ersten Polarisationsfilter hindurchtretende Licht beim Auftreffen auf den zweiten Polarisationsfilter senkrecht zur Polarisationsebene des zweiten Filters steht, während in der anderen Richtung Licht transmittieren kann, da durch das magnetisierte Medium, die Verkippung der beiden Polarisationsebenen der beiden Filter gerade aufgehoben wird.

Besonders bevorzugt ist eine Ausführungsform, bei der das wellenmodifizierende Element ein Schalter, vorzugsweise ein Ein-/Ausschalter, ein Reflexions-/Transmissionsschalter oder ein Selektionsschalter ist. Ein Ein-/Ausschalter dient dazu, einen oder mehrere Wellenlängenkanäle wahlweise transmittieren zu lassen oder nicht. Ein Reflexions-/Transmissionsschalter dient dazu, einen oder mehrere Wellenlängenkanäle wahlweise transmittieren oder reflektieren zu lassen. Schließlich dient ein Selektionsschalter dazu, einen oder mehrere Wellenlängenkanäle wahlweise in die eine oder andere Richtung zu leiten. Der Selektionsschalter kann beispielsweise durch ein Prisma verwirklicht werden, daß bei Bedarf in den Strahlengang eingeschoben wird.

Die vorliegende Erfindung betrifft ebenso ein Verfahren zur Herstellung eines optischen Modifizierers. Es ist daher ebenfalls die Aufgabe der vorliegenden Erfindung, ein Verfahren zur Verfügung zu stellen, das die Herstellung eines optischen Modifizierers kostengünstig und vor allem mit hoher Genauigkeit erlaubt.

Erfindungsgemäß wird diese Aufgabe durch, ein Verfahren gemäß Anspruch 17 gelöst.

Das Material aus dem die Koppelvorrichtung des optischen Modifizierers hergestellt wird kann nahezu beliebig sein. Besonders bevorzugt kommt hier Kupfer oder Glas gegebenenfalls auch Silizium oder ein anderes Material mit hoher Wärmeleitfähigkeit und geringem thermischen Ausdehnungskoeffizienten zur Anwendung.

Auch wenn das Material vorzugsweise so gewählt wird, daß es im Bereich der reflektierenden Fläche für den gewünschten Wellenbereich zur Reflexion kommt, so ist es aber selbstverständlich auch möglich, die Koppelvorrichtung aus einem transparenten Material zu fertigen und in dem reflektierenden Bereich eine reflektierende Schicht, z.B. eine Metallschicht, aufzudampfen. Je nach Anwendungsfall kann es von Vorteil sein, wenn die reflektierende Fläche beschichtet und/oder poliert wird.

Die Anschlagfläche dient zur Justierung des Sende- oder Empfangselements in der Nähe eines Brennpunkts. Auch hier ist die Ausführung von reflektierender Fläche und Anschlagfläche nicht nur zeitsparend, sondern führt ebenso zu einer hochgenauen relativen Positionierung der Anschlagfläche in Bezug auf die reflektierende Fläche. Die Genauigkeit der Koppelvorrichtung wird daher im wesentlichen von der Güte des Drehwerkzeugs und der Positioniervorrichtung der Drehmaschine bestimmt. Die im allgemeinen manuelle Justierung des Drehwerkzeuges im Werkzeughalter und des Werkstücks im Werkstückhalter muß hingegen nicht exakt erfolgen, da es bei der Herstellung der Koppelvorrichtung nicht auf die absolute Genauigkeit, sondern lediglich auf die exakte Positionierung der Anschlagfläche relativ zu der reflektierenden Fläche ankommt.

Für die Herstellung von hohen Stückzahlen ist es erfindungsgemäß von Vorteil, dass eine Negativform des Dreh- oder Frästeils angefertigt wird und die Koppelvorrichtung durch anschließendes Abformen hergestellt wird. Dies hat zum einen den Vorteil, daß das zeitaufwendige Dreh- oder Fräsverfahren nur einmal durchgeführt werden muß. Danach kann mit Hilfe der Form eine im Prinzip beliebig große Anzahl von Koppelvorrichtungen hergestellt werden. Zum anderen hat das Abformen den Vorteil, daß die Materialwahl zur Herstellung der Koppelvorrichtung deutlich erhöht wird. So muß durch die Abformtechnik nicht mehr Rücksicht auf das Drehverfahren genommen werden. Es ist beispielsweise möglich, die Koppelvorrichtung beispielsweise aus Kunststoff oder Glas mittels Spritzgießen, Heißprägen, Heißpressen oder Gießen zu fertigen.

Vorzugsweise wird die Negativform direkt als Dreh- oder Frästeil hergestellt.

Eine besonders zweckmäßige Ausführungsform sieht vor, daß vor dem Abformen an der Negativform ein Bereich abgestochen wird, so daß das abgeformte Positiv zumindest einen weiteren Anschlag aufweist. Dadurch, daß der mindestens eine weitere Anschlag an der Negativform ausgebildet wird, ist die Herstellung des mindestens einen weiteren Anschlags vereinfacht. Wollte man den weiteren Anschlag bereits an dem Dreh- oder Frästeil anbringen, so müßte dies aufgeschweißt oder angeschraubt werden, da durch das Anfertigen des ersten Anschlags mittels Drehen oder Fräsen notwendigerweise alles Material, das für die weiteren Anschläge dienen könnte, weggenommen wird.

Es versteht sich, daß beispielsweise bei der Ausführungsform mit ellipsenförmiger reflektierenden Fläche auch Anschläge in der Nähe beider Brennpunkte vorgesehen werden können.

Für die Fälle in denen mehrer Koppelvorrichtungen nebeneinander angeordnet werden sollen, wird mit Vorteil ein gemeinsames Formteil hergestellt, das mehrere bereits zueinander ausgerichtete Koppelvorrichtungen aufweist. Durch das einmalige Herstellen eines Formwerkzeuges, das bereits mehrere (zumindest zwei) zueinander ausgerichtete Formwerkzeuge für Koppelvorrichtungen umfaßt, kann der optische Modifizierer kostengünstig in großer Stückzahl angefertigt werden.

Vorzugsweise werden zwei Formteile hergestellt, die jeweils mindestens zwei Koppelvorrichtungen beinhalten und die lediglich im richtigen Abstand zueinander und zu mindestens einem wellenmodifizierenden Element angeordnet werden müssen.

Mit Vorteil wird der Abstand der beiden Formteile zueinander dadurch festgelegt, daß Abstandshalter vorzugsweise einstückig an den Formteilen angeordnet werden.

Erfindungsgemäß werden zwei Formteile mit Abstandshaltern an zwei gegenüberliegenden Seiten einer Platte angeordnet. Die Platte ist für den zu übertragenden Wellenlängenbereich transparent. Diese Ausführungsform mit der Platte hat zudem den Vorteil, daß zumindest ein wellenmodifizierendes Element auf der Platte angeordnet werden kann.

Die Formteile mit Abstandshaltern und integrierten Koppelvorrichtungen können sehr kostengünstig in großen Stückzahlen hergestellt werden. Die Platte, beispielsweise eine Glasplatte, ist ebenfalls preisgünstig. Durch die erfindungsgemäße Anordnung ist eine passive Justierung des optischen Modifizierers möglich, d.h. die einzelnen Teile werden lediglich zusammengesetzt und die Sende- und Empfangselemente mit Hilfe der Anschläge angeordnet. Eine manuellen Justierung in Abhängigkeit von der übertragenen Intensität des optischen Modifizierers, wie sie bei bekannten Modifizierern gehandhabt wird, ist nicht notwendig.

Weitere Vorteile, Merkmale und Anwendungsmöglichkeiten der vorliegenden Erfindung werden deutlich anhand der folgenden Beschreibung bevorzugter Ausführungsformen sowie der dazugehörigen Figuren.

Es zeigen:
- Figuren 1a-d: eine erste Ausführungsform der Koppelvorrichtung, wie sie in dem erfindungsgemäßen optischen Modifizierer verwendet wird, in einer schematischen Ansicht, einer Schnittansicht, einer Draufsicht sowie einer perspektivischen Ansicht,
- Figuren 2a-d: eine zweite Ausführungsform der Koppelvorrichtung in einer schematischen Ansicht, einer Schnittansicht, einer Draufsicht sowie einer perspektivischen Ansicht,
- Figuren 3a-d: eine dritte Ausführungsform der Koppelvorrichtung in einer schematischen Ansicht, einer Schnittansicht, einer Draufsicht sowie einer perspektivischen Ansicht,
- Figuren 4a und b: eine vierte Ausführungsform der Koppelvorrichtung in zwei perspektivischen Ansichten,
- Figuren 5a-d: eine fünfte Ausführungsform der Koppelvorrichtung in einer schematischen Ansicht, einer Schnittansicht sowie zwei perspektivischen Ansichten,
- Figur 6: einen ersten Strahlengang eines optischen Modifizierers;
- Figuren 7 bis 14: weitere Strahlengänge von optischen Modifizierern und
- Figuren 15 bis 21: mehrere Ansichten einer erfindungsgemäßen, besonders kompakten Ausführungsform.

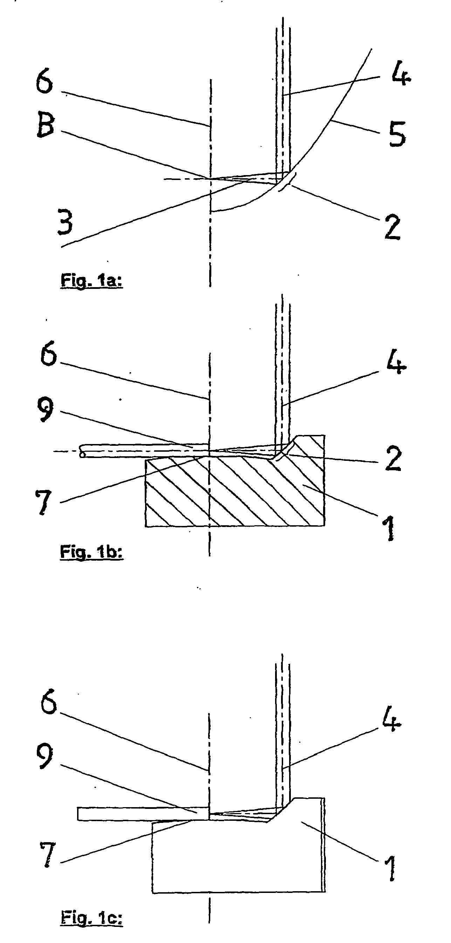

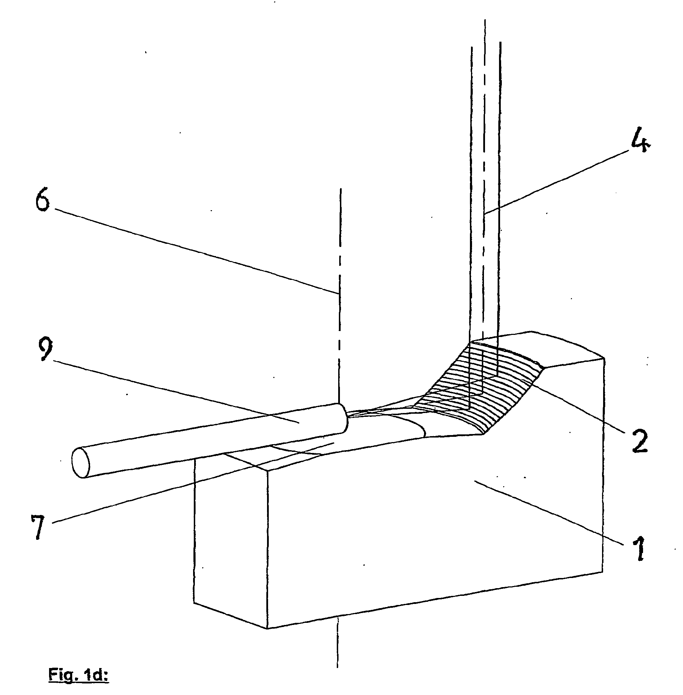

Zunächst soll die Koppelvorrichtung erläutert werden, die in dem erfindungsgemäßen optischen Modifizierer verwendet wird. In den Figuren 1a bis 1d ist daher eine erste Ausführungsform der Koppelvorrichtung dargestellt. Zunächst ist in Figur 1a schematisch das Umleitprinzip demonstriert. Eine reflektierende Fläche 2 folgt im Profil der Form einer Parabel 5. Senkrecht zur Ebene der Parabel 5 ist die Krümmung der Fläche 2 kreisförmig, da sie den Ausschnitt der Oberfläche eines Rotationskörpers bildet. Im Brennpunkt B der Parabel erweitert sich ein Lichtstrahl 3, der auf die reflektierende Fläche 2 auftritt, und als reflektierter Strahl 4 die Koppelvorrichtung verläßt. Deutlich wird daß die von dem Brennpunkt B ausgehenden Strahlen durch die Koppelvorrichtung ins Unendliche abgebildet werden. Bei der hier gezeigten Anordnung beträgt der Winkel zwischen dem einfallenden Lichtstrahl 3 und dem ausfallenden Lichtstrahl 4 etwa 90°. In den Figuren 1b und 1c sind ein Schnitt durch die erste Ausführungsform bzw. eine Seitenansicht gezeigt. Die Koppelvorrichtung besteht aus einem Grundkörper 1, der eine reflektierende Fläche 2 aufweist. Des weiteren ist eine Anschlagfläche 7 vorgesehen, die zur Aufnahme einer Glasfaser dient. Wird die Glasfaser 9 derart auf die Anschlagfläche 7 gelegt, daß sie in der Symmetrieachse der Parabel 5 endet, so liegt, geeignete Anordnung der Anschlagfläche 7 vorausgesetzt, die Faserendfläche der Faser 9 in etwa im Brennpunkt B.

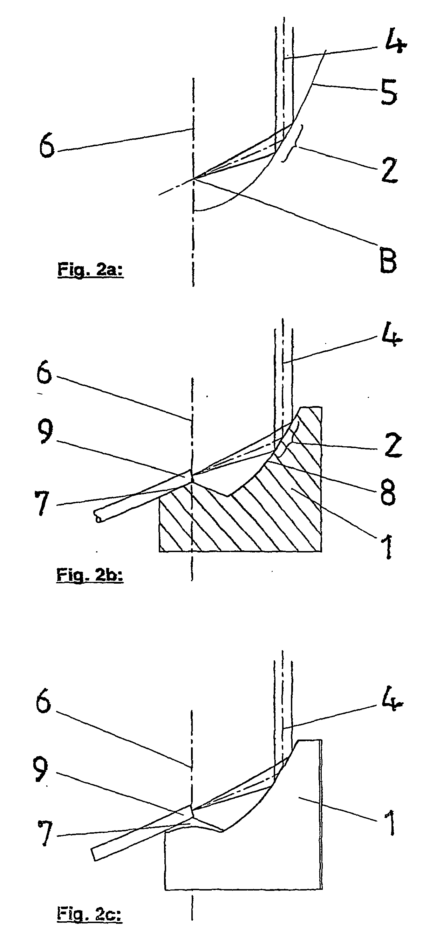

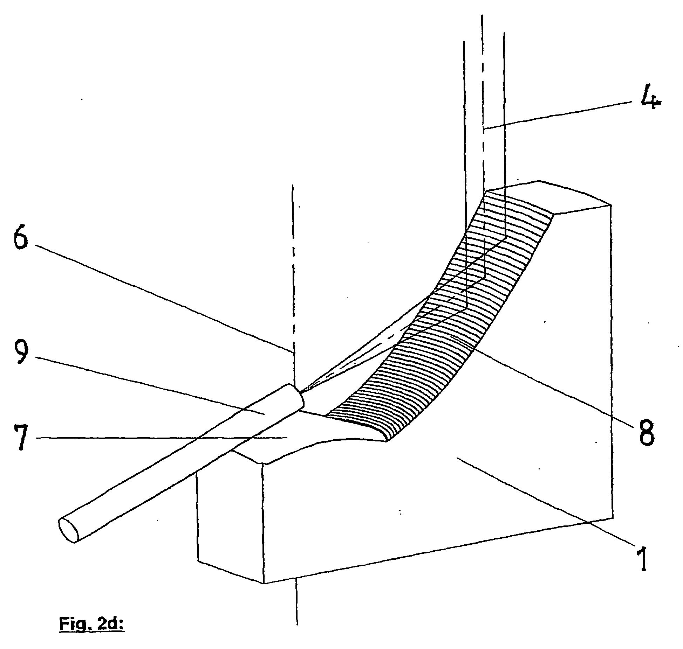

In Figur 1d ist eine perspektivische Ansicht der Koppelvorrichtung zu sehen. Zu erkennen ist, daß die reflektierende Fläche 2 der Form eines Rotationsparaboloiden folgt. Durch die hier gezeigte Koppelvorrichtung kann Licht, das durch die Glasfaser 9 am Ende der Glasfaser divergent austritt, an der reflektierenden Fläche 2 um etwa 90° umgelenkt werden und verläuft dann nahezu parallel. Es versteht sich, daß die parallelen Eigenschaften des reflektierten Lichtstrahls 4 umso besser sind, je genauer die Faserendfläche der Glasfaser 9 im Brennpunkt B angeordnet ist. Um eine möglichst gute Positionierung ohne aufwendige Justierarbeiten zu ermöglichen, ist eine Anschlagfläche 7 vorgesehen, die derart angeordnet ist, daß die Faserendfläche der Glasfaser 9 im auf die Anschlagfläche 7 aufgelegten Zustand exakt in Höhe des Brennpunkts B liegt. Durch Verschieben der Glasfaser 9 auf der Anschlagfläche 7 muß die Faserendfläche lediglich so positioniert werden, daß sie in etwa auf der Rotationsachse 6 des Rotationsparaboloiden der reflektierenden Fläche 2 liegt. Wie in den Figuren 2a bis 2d dargestellten Ausführungsform zu sehen ist, muß der von der Glasfaser 9 ausgehende divergente Lichtstrahl 3 nicht unbedingt senkrecht zu der Rotationsachse 6 verlaufen, sondern kann beispielsweise auch verkippt sein. Wesentlich ist lediglich, daß der divergierende Lichtstrahl in etwa vom Brennpunkt B der Parabel ausgeht. Es ist unerheblich, wo der Auftreffpunkt 2 des zu reflektierenden Strahls 3 an der reflektierenden Fläche 8 auftritt.

Um das Verständnis des optischen Modifizierers zu erleichtern, soll an dieser Stelle ausdrücklich darauf hingewiesen werden, daß bei allen gezeigten Ausführungsformen der Strahlengang auch umgekehrt verlaufen kann. So ist es beispielsweise möglich, Licht in eine in der Nähe des Brennpunkts angeordnete Endfläche der Glasfaser 9 einzukoppeln, das parallel zu der Rotationsachse 6 auf die reflektierende Fläche 8 trifft.

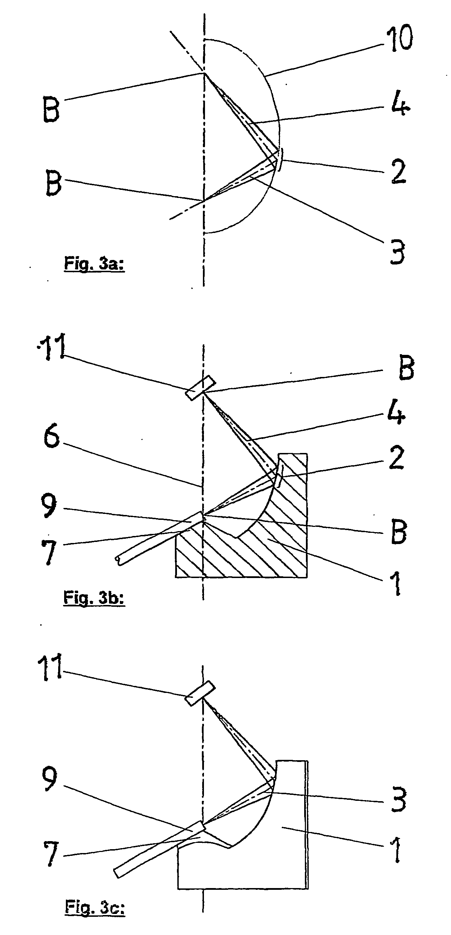

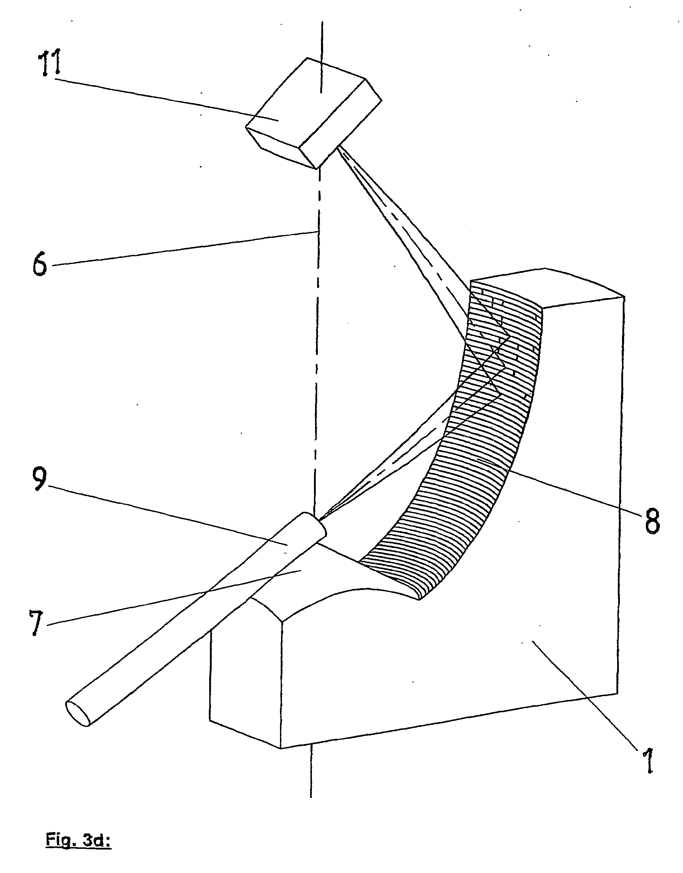

In den Figuren 3a bis d ist eine dritte Ausführungsform der Koppelvorrichtung dargestellt. Wie in der schematischen Skizze von Figur 3a deutlich wird, folgt hier die reflektierende Fläche 2 der Form einer Ellipse 10. Dies hat zur Folge, daß Licht, das von dem einen Brennpunkt B der Ellipse divergierend auf die reflektierende Fläche 2 fällt, in den anderen Brennpunkt B abgebildet wird. Diese Ausführungsform ist dadurch besonders geeignet, um Licht von einem Glasfaserende in das Ende einer anderen Glasfaser einzukoppeln. Dabei müssen lediglich die (polierten) Endflächen der jeweiligen Glasfaser in den Brennpunkten B der Ellipse angeordnet sein.

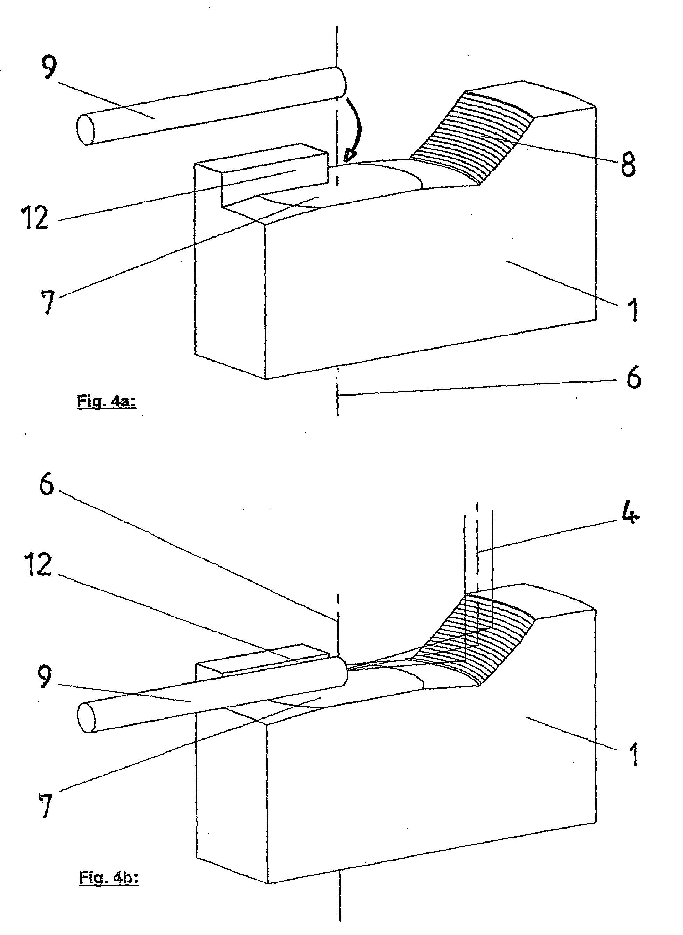

Wie bereits ausgeführt, ist eine Anschlagfläche 7 für die exakte Positionierung der Glasfaser in Richtung der Rotationsachse 6 vorgesehen. Wie in den Figuren 4a und 4b durch den Pfeil angedeutet ist, muß die Glasfaser 9 lediglich auf die Anschlagfläche 7 aufgelegt werden, um eine Justierung der Glasfaser in Richtung der Rotationsachse 6 zu erhalten. In der in den Figuren 4a und b gezeigten Ausführungsform ist ein weiterer Anschlag 12 vorgesehen, der eine Justierung der Faser in Richtung einer Linie erlaubt, die senkrecht zu der Faserachse und senkrecht zu der Rotationsachse 6 verläuft. Durch die Anschlagfläche 12 ist die Justierung noch einmal deutlich vereinfacht worden. Eine aufwendige Justierung ist nicht notwendig, da die Glasfaser 9 lediglich auf die beiden Anschlagflächen 7, 12 gelegt werden muß. Eine Justierung bzw. Positionierung erfolgt nur noch in Richtung der Faserachse. Diese Justierung kann beispielsweise mit Hilfe einer optischen Markierung auf dem Grundkörper 1 erfolgen. Da der optische Modifizierer wellenlängenunabhängig ist, kann die Justierung auch in den Fällen, in denen eine Signalübertragung mit nicht sichtbarem Licht geplant ist, mit sichtbarem Licht vorgenommen werden. Der Strahlverlauf kann dann von der justierenden Person mit den Augen verfolgt werden und eine Einstellung ist leicht möglich. Wird die Koppelvorrichtung dann mit Licht anderer Wellenlänge in Betrieb genommen, so ist keine Nachjustierung notwendig. Bei den bekannten Koppelanordnungen mit zwei GRIN-Linsen und einem Spiegel muß hingegen die Justierung notwendigerweise auf die Wellenlänge abgestimmt werden, so daß im allgemeinen eine Justierung mit dem Auge nicht möglich ist.

Selbstverständlich ist es auch möglich, einen dritten Anschlag vorzusehen, der sich beispielsweise in etwa senkrecht zu der zweiten Anschlagfläche 12 erstreckt und z.B. eine Art Nase bildet, so daß zur exakten Positionierung die Glasfaser 9 zunächst mit den Anschlagflächen 7 und 12 in Kontakt gebracht wird und dann die Glasfaser 9 in Richtung der reflektierenden Fläche 8 bewegt wird, bis die Glasfaserendfläche an die dritte Anschlagfläche trifft, die die Form einer flachen Stufe hat. Dabei ist zu berücksichtigen, daß der Anschlag, sofern er nicht transparent ausgebildet ist, nicht den Licht leitenden Kern der Faserendfläche verdecken darf.

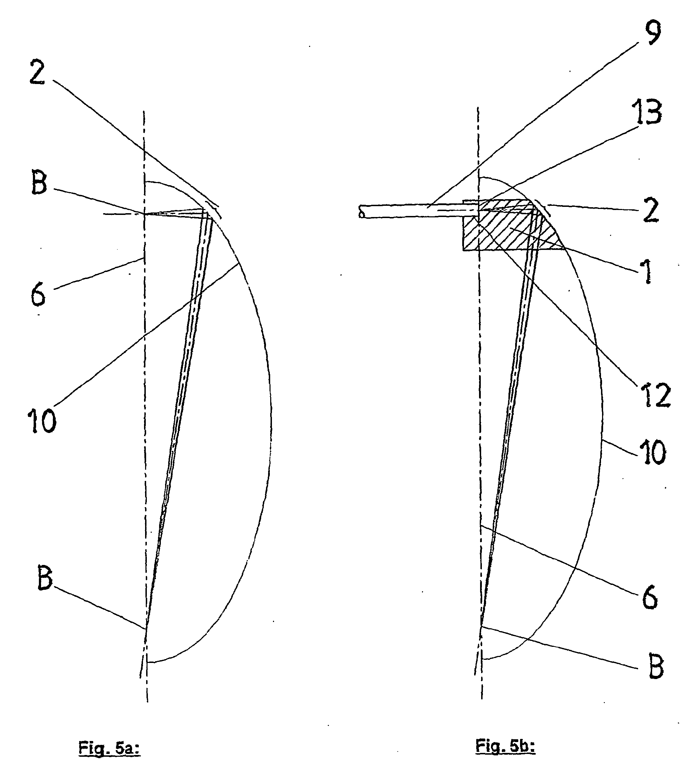

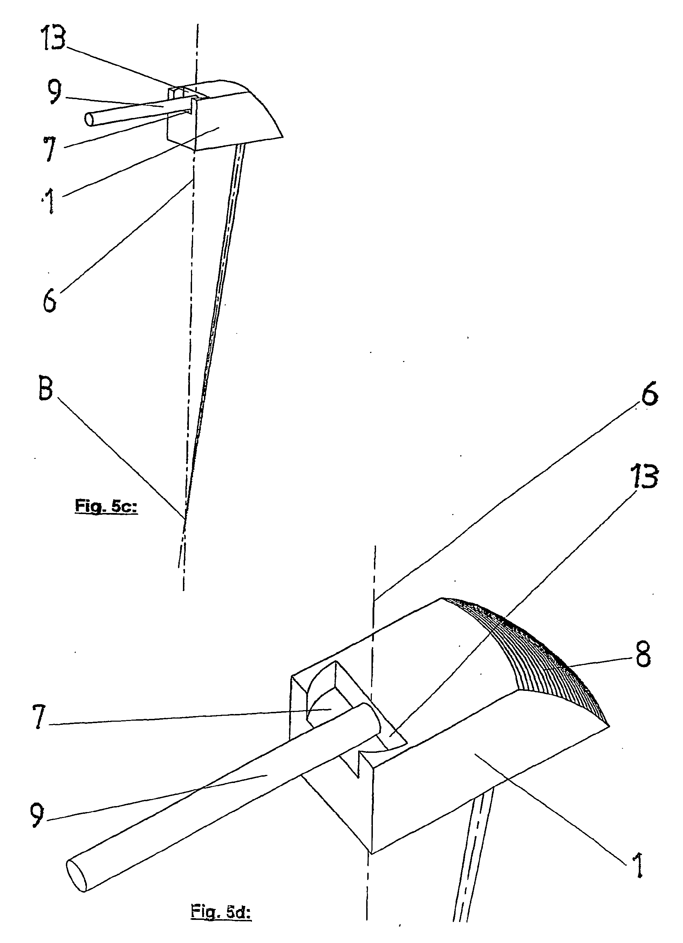

In den Figuren 5a bis d ist eine fünfte Ausführungsform gezeigt, bei der die Reflexion innerhalb eines transparenten Grundkörpers 1 aufgrund von Totalreflexion am Übergang vom optisch dickeren in das optisch dünnere Medium erfolgt. Das Reflexionsprinzip ist schematisch in Figur 5a dargestellt und entspricht im wesentlichen der Figur 3a. Das aus der Faserendfläche der Glasfaser 9 austretende Licht tritt am Brennpunkt B in den transparenten Grundkörper 1 ein. Das Licht verläuft innerhalb des Grundkörpers 1, bis es auf die gekrümmte Außenfläche 2 trifft. Aufgrund des Übergangs zwischen dem optisch dichteren zu dem optisch dünneren Medium kommt es hier zur Totalreflexion. Der reflektierte Lichtstrahl tritt schließlich unter einem Winkel aus dem Grundkörper 1 aus, bei dem keine Totalreflexion stattfindet.

Auch bei dieser Ausführungsform wird das an dem einen Brennpunkt B aus der Glasfaser 9 austretende Licht in den anderen Brennpunkt B abgebildet. Deutlich zu erkennen ist, daß auch hier mehrere Anschläge vorhanden sind. So ist beispielsweise die Anschlagfläche 7 dafür vorgesehen, der Glasfaser 9 als Positionierungsanschlag in Richtung der Rotationsachse 6 zu dienen. In Richtung der Faserachse ist ein Anschlag 13 vorgesehen.

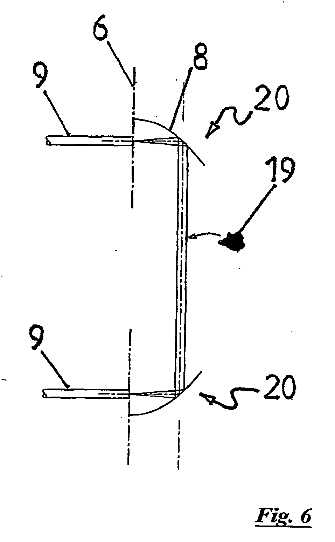

In Figur 6 ist ein erster Strahlengang eines optischen Modifizierers gezeigt. Deutlich zu erkennen sind zwei Koppelvorrichtungen 20, wie sie in Verbindung mit den vorhergehenden Figuren beschrieben wurden, in deren Brennpunkt sich jeweils die Faserendfläche einer Glasfaser 9 befindet. Die reflektierende Fläche 8 der Koppelvorrichtung 20 hat hier im Profil die Form einer Parabel, so daß das von einem Brennpunkt B sich strahlenförmig aufweitende Licht von der Koppelvorrichtung 20 derart reflektiert wird, daß es im wesentlichen parallel verläuft. Die beiden Koppelvorrichtungen sind derart angeordnet, daß Licht, das von der einen Glasfaser 9 ausgeht, zunächst an der einen Koppelvorrichtung 20 reflektiert wird und dann als paralleler Lichtstrahl auf die zweite Koppelvorrichtung 20 trifft, die den Lichtstrahl direkt auf die Faserendfläche der zweiten Glasfaser 9 abbildet. Durch die Anordnung der beiden Koppelvorrichtungen 20 wird alles Licht, das aus der einen Glasfaser 9 austritt, auf die Faserendfläche der anderen Glasfaser 9 abgebildet und umgekehrt. Schematisch ist ein wellenmodifizierendes Element 19 angeordnet, das im Prinzip jede beliebige Form haben kann und in den Strahlengang gebracht wird. Durch gezieltes Anordnen von einem oder mehreren wellenmodifizierenden Elementen in dem Strahlengang kann das übertragene Signal, z. B. durch Abschattung, modifiziert werden.

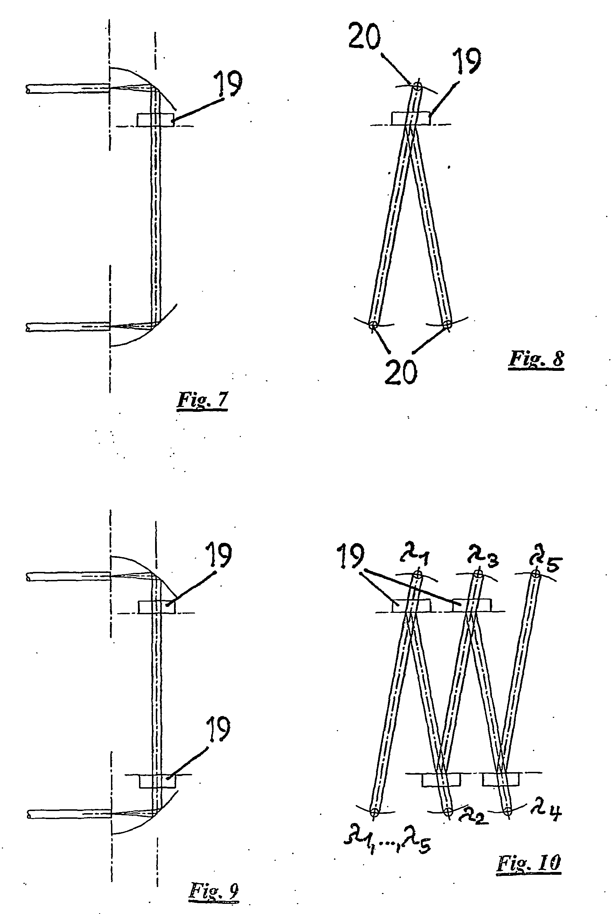

In Figur 7 ist ein anderer Strahlengang eines optischen Modifizierers gezeigt. Das wellenmodifizierende Element 19 ist hier eine im wesentlichen ebene Struktur, die Teile des Lichts oder das gesamte Licht reflektieren kann, während Teile des Lichts transmittieren können (z. B. ein Schmalbandfilter). Mit dieser Anordnung ist es beispielsweise möglich, von einer Glasfaser, die Informationssignale auf mehreren Wellenlängenkanälen trägt, einen oder mehrere Wellenlängenkanäle auszuwählen, die in die andere Glasfaser eingekoppelt werden.

In Figur 8 ist ein weiterer Strahlengang eines optischen Modifizierers gezeigt, der hier eine einfache Ausführungsform eines Multiplexers/Demultiplexers ist. Hier sind drei Koppelvorrichtungen 20 und ein wellenmodifizierendes Element 19 angeordnet. Werden beispielsweise von der Koppelvorrichtung links unten in Figur 8 Informationssignale mit zwei Wellenlängen, das heißt auf zwei Wellenlängenkanälen übertragen, so sorgt das wellenmodifizierende Element 19 dafür, daß ein Wellenlängenkanal, das heißt eine Frequenz transmittieren kann, so daß dieser Wellenlängenkanal an der oberen Koppelvorrichtung 20 in eine entsprechend bereitgestellte Glasfaser eingekoppelt wird und der andere Wellenlängenkanal an dem wellenmodifizierten Element 19 reflektiert wird, so daß dieser über die Koppelvorrichtung rechts unten in eine andere Glasfaser eingekoppelt wird.

Es versteht sich, daß an der Koppelvorrichtung 20 nicht unbedingt Glasfasern angeordnet sein müssen, sondern beispielsweise auch optischelektrische Wandler, die die optischen Informationssignale in elektrische Signale umwandeln, vorhanden sein können.

Der Strahlengang der Figur 8 kann nicht nur als Demultiplexer, sondern auch als Multiplexer verwendet werden. Stehen beispielsweise zwei verschiedene Informationssignale unterschiedlicher Wellenlängenkanäle auf zwei verschiedenen Glasfasern zur Verfügung, so kann der eine Wellenlängenkanal über die Koppelvorrichtung rechts unten und der andere Wellenlängenkanal über die Koppelvorrichtung oben in Figur 8 eingekoppelt werden. Während der eine Wellenlängenkanal zu der Koppelvorrichtung links unten in Figur 8 direkt übertragen wird, wobei er das wellenmodifizierende Element 19 passiert, wird der andere Wellenlängenkanal an dem wellenmodifizierenden Element 19 reflektiert und an die Koppelvorrichtung links unten in Figur 8 übertragen.

In den Figuren 9 und 10 ist beispielhaft in einer Seitenansicht und einer Schnittansicht ein etwas komplizierterer Strahlengang eines Multiplexers/Demultiplexers gezeigt. Diese Variante hat sechs Koppelvorrichtungen 20 und vier wellenmodifizierende Elemente. Anhand dieses Strahlengangs soll lediglich die Funktionsweise als Demultiplexer erläutert werden, wobei die Multiplexerfunktion sich bei einem umgekehrten Strahlenverlauf ergibt.

Trägt beispielsweise eine Glasfaser Informationssignale von fünf verschiedenen Wellenlängenkanälen mit den Wellenlängen λ₁, λ₂, λ₃, λ₄ und λ₅ und wird das Licht in dieser Glasfaser über die Koppelvorrichtung 20 links unten in Figur 10 in den Demultiplexer eingekoppelt, so wird das Licht parallelisiert und trifft dann auf das wellenmodifizierende Element 19 links oben in Figur 10. Dieses wellenmodifizierende Element 19 ist derart ausgestaltet, daß es lediglich einen Wellenlängenkanal, das heißt Licht mit der Wellenlänge λ₁ passieren läßt, während alle anderen Wellenlängen reflektiert werden. Dies führt dazu, daß an der Koppelvorrichtung links oben in Figur 10 lediglich ein Kanal, das heißt Informationssignale der Wellenlänge λ₁ empfangen werden. Das von dem wellenmodifizierten Element 19 links oben in Figur 10 reflektierte Signal beinhaltet nun nur noch Signale mit den Wellenlängen λ₂, λ₃, λ₄ und λ₅. Dieses reduzierte Signal trifft auf das wellenmodifizierte Element links unten in Figur 10. Dieses wellenmodifizierende Element 19 ist derart ausgeführt, daß lediglich Informationssignale mit der Wellenlänge λ₂ durchgelassen werden, während alle anderen Wellenlängen, das heißt die Wellenlängen λ₃, λ₄ und λ₅ reflektiert werden. Dieses Prinzip setzt sich bei den beiden weiteren wellenmodifizierenden Elementen 19 fort, so daß die fünf Wellenlängenkanäle, die ursprünglich über eine einzige Glasfaser übertragen wurden, durch die Demultiplexer-Anordnung auf fünf verschiedene Glasfasern aufgetrennt werden.

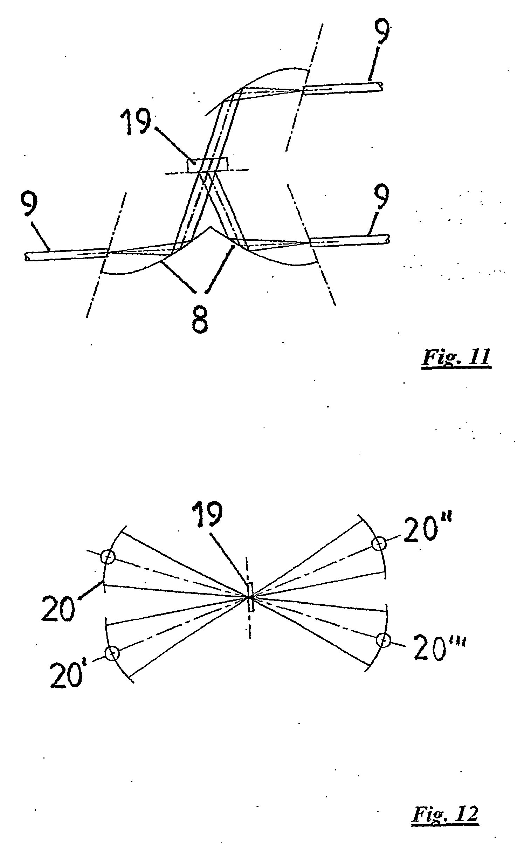

In Figur 11 ist ein weiterer Strahlengang eines Multiplexers/Demultiplexers gezeigt. Die Verwendung der Koppelvorrichtungen 20 hat zusätzlich den Vorteil, daß die gesamte Anordnung sehr kompakt ist und das Licht bzw. die Glasfasern in nahezu jeder beliebigen Orientierung aus dem optischen Modifizierer herausgeführt werden können. An dieser Stelle soll noch einmal betont werden, daß alle Strahlengänge auch mit umgekehrten Strahlenverlauf verwendet werden können. Selbstverständlich sind aber auch bidirektionale Anwendungen möglich. So können mit einer Anordnung, wie sie in Figur 11 gezeigt ist, beispielsweise Signale mit der Wellenlänge λ₁= 1,31 µm über die Koppelvorrichtung rechts oben in Figur 11 in die Glasfaser links unten eingekoppelt werden. Gleichzeitig können beispielsweise Informationen der Wellenlänge λ₂ = 1,55 µm von der Glasfaser links unten über die Koppelvorrichtung rechts unten empfangen werden.

In der in Figur 11 gezeigten Anordnung sind alle Glasfasern parallel und in einer Ebene, der Bildebene, angeordnet. Denkbar ist daher eine Anordnung, bei der von der einen Seite mittels eines Steckers eine oder mehrere Glasfasern, die mehrere Wellenlängenkanäle übertragen, an den optischen Modifizierer herangeführt werden und parallel dazu an der anderen Seite beispielsweise in Form eines Steckers mehrere Glasfasern zur Verfügung gestellt werden, die zur Aufnahme der einzelnen Wellenlängenkanäle vorgesehen sind.

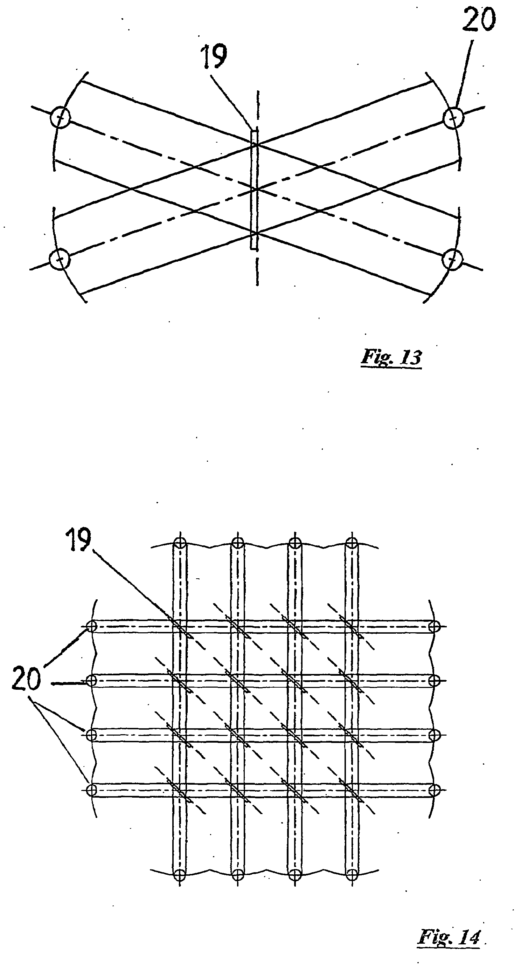

In. Figur 12 ist schließlich eine weitere Anordnung eines optischen Modifizierers gezeigt, bei der das wellenmodifizierende Element ein Schalter ist. Dieser Schalter 19 kann beispielsweise so ausgebildet sein, daß er bei Bedarf in den Strahlengang eingeschoben oder herausgezogen wird. Bei der gezeigten Anordnung wird deutlich, daß hier die Koppelvorrichtungen eine gekrümmte Fläche haben, deren Profil im wesentlichen einer Ellipse folgt, so daß die von den Koppelvorrichtungen ausgehenden Strahlen nicht parallel abgebildet werden, sondern in den Brennpunkt der gekrümmten Flächen. Der Schalter 19 ist im Brennpunkt 19 angeordnet. Bei dieser 2 x 2 Schalteranordnung mit Fokuspunkt muß die Anordnung der Koppelvorrichtungen zueinander sehr exakt erfolgen. Die in Figur 13 gezeigte Anordnung einer 2 x 2 Schalteranordnung ohne Fokuspunkt stellt nur geringere Anforderungen an die exakte relative Anordnung der Koppelvorrichtungen zueinander. Die 2 x 2 Schalteranordnung mit Fokuspunkt hat jedoch den Vorteil, daß hier eine nicht ganz exakte Positionierung des Aktuators, d. h. des schaltenden wellenmodifizierenden Elements, in Kauf genommen werden kann, während bei der 2 x 2 Schalteranordnung ohne Fokuspunkt eine nicht exakte Anordnung des Aktuators die Intensität des Informationssignals schwächen kann.

Beispielhaft ist in Figur 14 ein weiterer Strahlverlauf eines optischen Modifizierers dargestellt, der insgesamt 16 Koppelvorrichtungen 20 und 16 wellenmodifizierende Elemente 19 umfaßt. Deutlich wird, daß auf engstem Raum eine Vielzahl von Kanälen verschiedener oder gleicher Wellenlänge beliebig geschaltet werden können. Insbesondere durch die Verwendung der speziellen Koppelvorrichtungen in dem optischen Modifizierer ist es nun möglich, auf engstem Raum den Lichtweg durch Reflexion um einen Winkel abzulenken. Dies führt, insbesondere in der optischen Tele- und Datenkommunikation zu einer wesentlich kompakteren Bauform der verwendeten Geräte.

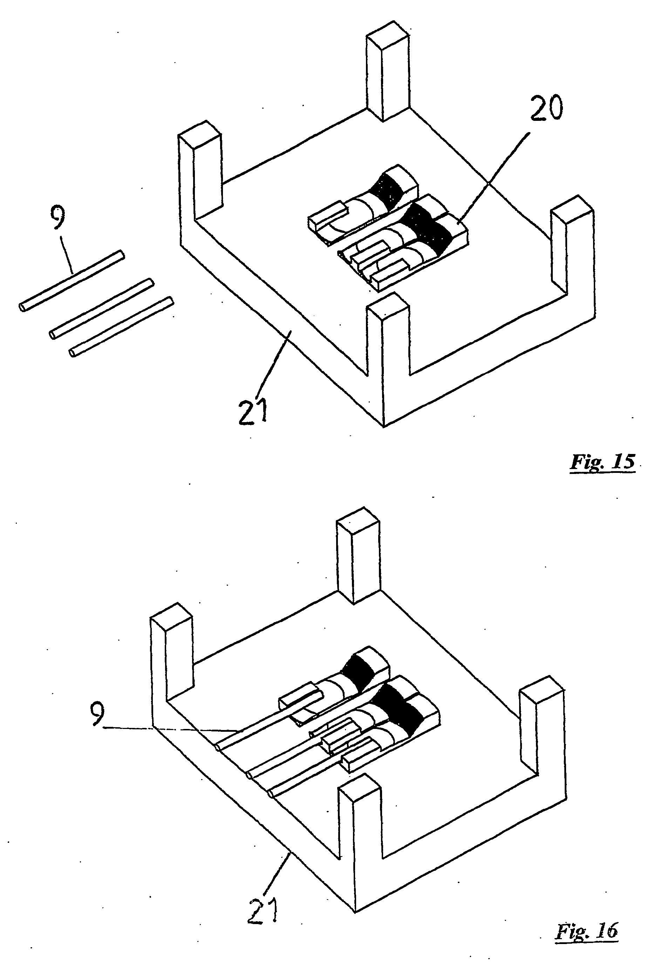

Die Figuren 15 bis 21 zeigen eine erfindungsgemäße Ausführungsform eines Multiplexers/Demultiplexers. Der Multiplexer/Demultiplexer entspricht dem in Figur 10 schematisch dargestellten Strahlengang. Wesentliches Element ist der in Figur 15 gezeigte Tragkörper 21 mit drei Koppelvorrichtungen 20. Bei der gezeigten Ausführungsform bilden Tragkörper 21 und die Koppelvorrichtungen 20 zusammen ein Formteil. Mit anderen Worten sind Tragkörper 21 und Koppelvorrichtungen einstückig ausgebildet.

Die Koppelvorrichtungen 20 weisen zwei Anschlagflächen auf, die zur Aufnahme beispielsweise einer Glasfaser 9 dienen, wie in Figur 16 dargestellt.

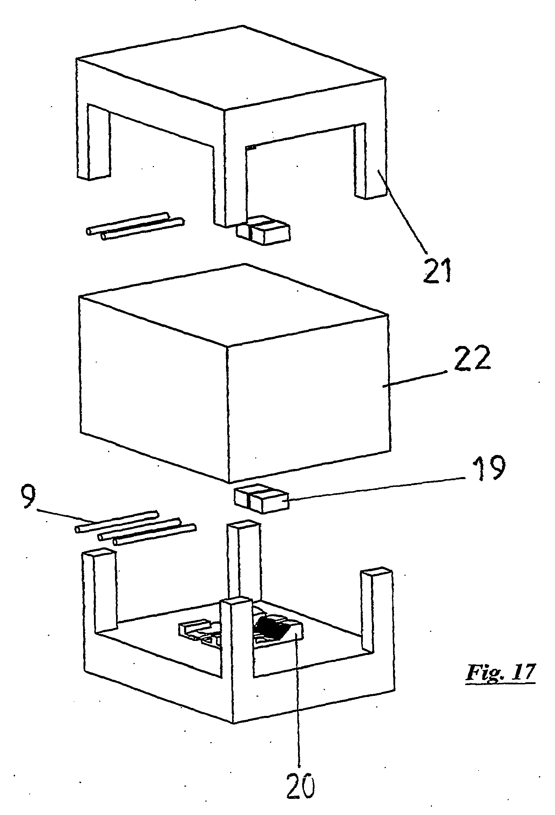

In Figur 17 ist in einer Explosionsdarstellung der Multiplexer/Demultiplexer gezeigt. Er besteht aus zwei Tragkörpern 21 mit Koppelvorrichtungen 20, vier wellenmodifizierenden Elementen 19, die hier als Frequenzbandspiegel ausgebildet sind, und einer Glasplatte 22.

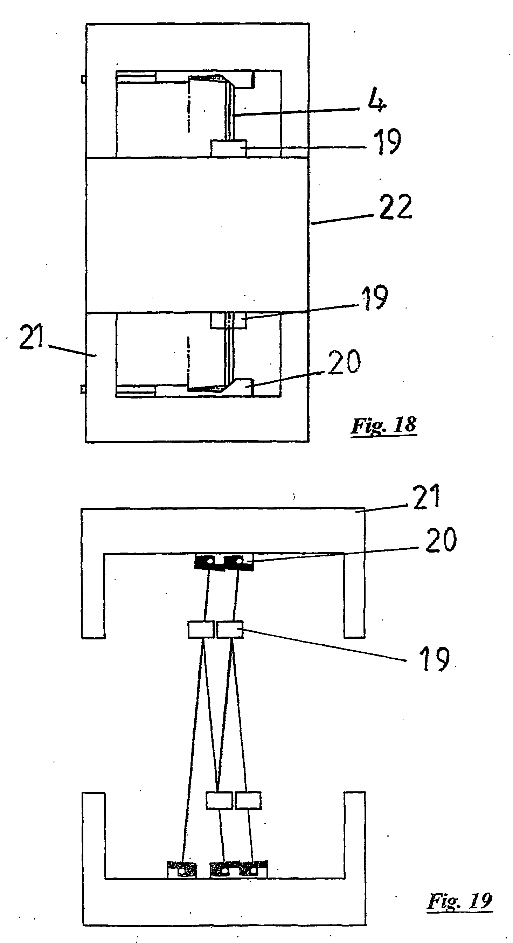

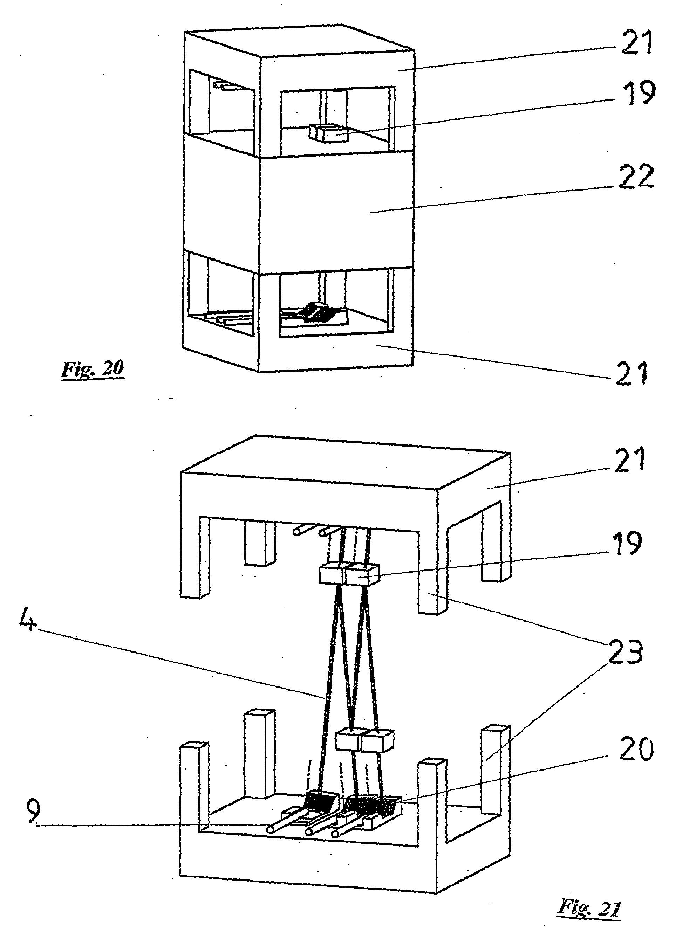

Die Figuren 18 und 20 zeigen den zusammengesetzten Multiplexer/Demultiplexer in einer Seitenansicht und einer perspektivischen Ansicht. Im gezeigten Ausführungsbeispiel hat die Glasplatte 22 eine Dicke von etwa 5 mm und die Tragkörper 21 weisen eine Höhe von etwa 2mm auf, so daß sich eine Gesamthöhe bzw. Gesamtdicke des Multiplexer/Demultiplexer von etwa 9 bis 10 mm ergibt.

In den Figuren 19 und 21 ist zu Zwecken der Übersichtlichkeit die Glasplatte 22 nicht eingezeichnet worden. Zur Verdeutlichung ist der Strahlenverlauf 4 angedeutet. Die beiden Tragkörper 21 besitzen jeweils vier Abstandhalter 23, die sich in Form von Füßen vom Tragkörper hinweg erstrecken. Durch die Länge der Abstandhalter 23, die in der gezeigten Ausführungsform einstückig mit den Tragkörpern 21 ausgebildet sind, wird der Abstand zwischen Koppelvorrichtung und Glasplatte 22 bestimmt. Wird die gezeigte Ausführungsform hinreichend genau gefertigt, was beispielsweise in der Ausgestaltung als Formteil zu erreichen ist, kann der Multiplexer/Demultiplexer sehr leicht zusammengesetzt werden und "passiv" justiert werden. Nach der Herstellung der beiden Tragkörper 21 mit den Koppelvorrichtungen 20 werden diese von zwei entgegengesetzten Seiten auf eine Glasscheibe 22 aufgesetzt. Die wellenmodifizierenden Elemente 19 werden lediglich auf die Glasplatte aufgelegt und gegebenenfalls, z.B. mit Hilfe eines Klebstoffes, fixiert. Die Abstandhalter 23 der Tragkörper 21 stellen den korrekten Abstand der Koppelvorrichtungen und in Bezug auf die wellenmodifizierenden Elemente sicher. Die Koppelvorrichtungen 20 auf den Tragkörpern 21 sind bereits im richtigen Winkel ausgebildet. Nach Justierung der Sende- und Empfangselemente beispielsweise der Glasfasern 9 mit Hilfe der Anschlagsflächen ist der Multiplexer/Demultiplexer bereits justiert. Eine aufwendige "aktive" Justierung bei der die Lage der wellenmodifizierenden Elemente in Bezug auf die Koppelvorrichtungen oder der Lage der Koppelvorrichtungen zueinander eingestellt werden muß, ist nicht notwendig, kann jedoch bei Bedarf erfolgen.

Im Gegensatz zu Linsensystemen zeigt die im erfindungsgemäßen Modifizierer verwendete Koppelvorrichtung keinerlei Abbildungsfehler. Überdies wird nur eine optische Oberfläche benötigt, so daß die Fertigung kostengünstiger wird und gleichzeitig die sonst umgängliche Toleranzaddition vermieden wird.

Dadurch, daß im Gegensatz zu üblichen Umlenkverfahren mit GRIN-Linsen kein Material im Strahlengang der Koppelvorrichtung erforderlich ist, ist der Absorptionsverlust deutlich geringer.

Die Koppelvorrichtungen können so gefertigt werden, daß sie in jeder Richtung nicht größer als 5 mm oder weniger betragen. Daher ist beispielsweise eine komplexe Anordnung, wie sie in Figur 14 gezeigt ist, auf einer Fläche von 2 x 2 cm leicht zu verwirklichen.

### Bezugszeichen

- (1): Grundkörper
- (2): reflektierende Fläche
- (3): einfallender Lichtstrahl
- (4): reflektierter Strahl
- (5): Parabel
- (6): Rotationsachse
- (7): Anschlagfläche
- (8): reflektierende Fläche
- (9): Glasfaser, Sende- oder Empfangselement
- (10): Ellipse
- (11): Sende- oder Empfangselement
- (12): Anschlagfläche
- (13): Anschlag
- (19): wellenmodifizierendes Element
- (20): Koppelvorrichtung
- (21): Tragkörper
- (22): Glasplatte
- (23): Abstandshalter
- (B): Brennpunkt

## Patentansprüche

1. Optischer Modifizierer bei welchem Signale einzelner oder mehrerer Wellenlängenkanäle in oder aus Sende- und/oder Empfangselementen einschließlich beispielsweise Wellenleitern ein- oder ausgekoppelt werden, mit zumindest zwei Formteilen, welche jeweils einen Tragkörper (21) sowie mindestens eine Koppelvorrichtung (20) mit einer gekrümmten reflektierenden Fläche (8) aufweisen, und einem wellenmodifizierenden Element (19), wobei an den Formteilen Abstandshalter (23) angeordnet sind und die Formteile auf zwei gegenüberliegenden Seiten beiderseits einer Platte (22), die aus einem für die zu übertragenden Lichtstrahlen transparentem Material besteht, angeordnet sind, wobei die Längen der Abstandshalter (23) die Abstände zwischen Koppelvorrichtungen (20) und Platte (22) bestimmen.

2. Optischer Modifizierer nach Anspruch 1, **dadurch gekennzeichnet, daß** eine Koppelvorrichtung (20) derart ausgebildet ist, daß ein Schnitt durch die gekrümmte Fläche (8) in etwa einem Abschnitt einer Parabel (5), Hyperbel oder Ellipse (10) entspricht.

3. Optischer Modifizierer nach Anspruch 1 oder 2, **dadurch gekennzeichnet, daß** eine Koppelvorrichtung (20) derart ausgebildet ist, daß die reflektierende Fläche (8) in etwa die Form eines Abschnitts eines Rotationsparaboloiden (5). Rotationsellipsoiden (10) oder Rotationshyperboloiden hat.

4. Optischer Modifizierer nach einem der Ansprüche 1 bis 3, **dadurch gekennzeichnet, daß** mindestens ein Sende- oder Empfangselement vorgesehen ist, das elektromagnetische Wellen (3, 4) auf die reflektierende Fläche (8) einer Koppelvorrichtung (20) sendet oder elektromagnetische Wellen (3, 4) von der reflektierenden Fläche (8) einer Koppelvorrichtung empfängt.

5. Optischer Modifizierer nach Anspruch 4, **dadurch gekennzeichnet, daß** zumindest ein Sende- oder Empfangselement (9, 11) in der Nähe eines Brennpunktes (B) der reflektierenden Fläche (8) einer Koppelvorrichtung angeordnet ist.

6. Optischer Modifizierer nach Anspruch 4 oder 5, **dadurch gekennzeichnet, daß** mindestens ein Sende- oder Empfangselement (9, 11) ein Wellenleiter, vorzugsweise eine Glasfaser, ist.

7. Optischer Modifizier nach einem der Ansprüche 1 bis 6, **dadurch gekennzeichnet, daß** mindestens ein Anschlag (7, 12, 13) an einer Koppelvorrichtung vorgesehen ist, für die Justierung eines Sende- oder Empfangselementes (9, 11)

8. Optischer Modifizierer nach Anspruch 7, **dadurch gekennzeichnet, daß** der Anschlag (7, 12, 13) derart ausgebildet ist, daß er die Justierung eines Sende- und Empfangselements (9, 11) in zwei, vorzugsweise in drei, im wesentlichen zueinander senkrechten Richtungen erlaubt.

9. Optischer Modifizierer nach Anspruch 7 oder 8, **dadurch gekennzeichnet, daß** der Anschlag (7, 12, 13) einstückig mit der reflektierenden Fläche (8) der Koppelvorrichtung ausgebildet ist.

10. Optischer Modifizierer nach einem der Ansprüche 1 bis 9, **dadurch gekennzeichnet, daß** mindestens ein Ein- und ein Ausgang vorgesehen sind und mindestens zwei Koppelvorrichtungen (20) derart angeordnet sind, daß elektromagnetische Wellen, die am Eingang in den optischen Modifizierer eintreten, zunächst an der ersten Koppelvorrichtung (20) reflektiert werden, dann das wellenmodifizierende Element (19) passieren und schließlich an der zweiten Koppelvorrichtung (20) zum Ausgang reflektiert werden.

11. Optischer Modifizierer nach einem der Ansprüche 1 bis 10, **dadurch gekennzeichnet, daß** ein wellenmodifizierendes Element (19) ein Filter ist.

12. Optischer Modifizierer nach Anspruch 11, **dadurch gekennzeichnet, daß** das wellenmodifizierende Element ein Frequenzbandfilter ist, welcher die elektromagnetischen Wellen zumindest in einem bestimmten Frequenzintervall reflektiert.

13. Optischer Modifizierer nach Anspruch 11 oder 12, **dadurch gekennzeichnet, daß** das wellenmodifizierende Element ein Frequenzbandfilter ist, welcher elektromagnetische Wellen mit einer Frequenz außerhalb eines bestimmten Frequenzintervalls transmittiert.

14. Optischer Modifizierer nach Anspruch 12 oder 13, **dadurch gekennzeichnet, daß** eine dritte Koppelvorrichtung (20) derart angeordnet ist, daß von dem Frequenzbandfilter reflektiertes Licht auf die dritte Koppelvorrichtung trifft.

15. Optischer Modifizierer nach Anspruch 14, **dadurch gekennzeichnet, daß** der Filter ein Graufilter, Farbfilter, ein Polarisationsfilter oder eine optische Diode bzw. ein optischer Isolator ist.

16. Optischer Modifizierer nach einem der Ansprüche 1 bis 15, **dadurch gekennzeichnet, daß** ein wellenmodifizierendes Element ein Schalter, vorzugsweise ein Ein-/Ausschalter, ein Reflexions-/Transmissionsschalter oder ein Selektionsschalter ist.

17. Verfahren zur Herstellung eines optischen Modifizierers nach einem der Ansprüche 1 bis 16, wobei eine reflektierende Fläche (8) als Teil einer Rotationsfläche mit einem Kegelschnitt als erzeugende Hüllkurve hergestellt wird, und zunächst eine Negativform bzw. ein Formwerkzeug angefertigt wird und eine Koppelvorrichtung durch anschließendes Abformen hergestellt wird, **dadurch gekennzeichnet, daß** ein Formteil hergestellt wird, daß einen Tragkörper (21) und mindesten eine daran angeordnete Koppelvorrichtung (20) aufweist und daß an dem Tragkörper (21) Abstandshalter (23) angeordnet werden und wobei zwei derartige Formteile auf zwei gegenüberliegenden Seiten beiderseits einer Platte (22) angeordnet werden, wobei die Platte aus einem für die zu übertragende Lichtstrahlen transparentem Material besteht, und wobei die Längen der Abstandshalter (23) die Abstände zwischen Koppelvorrichtungen (20) und Platte (22) bestimmen.

18. Verfahren nach Anspruch 17, **dadurch gekennzeichnet, daß** der Teil einer Rotationsfläche mittels Drehen oder Fräsen und/oder Polieren hergestellt wird.

19. Verfahren nach Anspruch 18, **dadurch gekennzeichnet, daß** in der gleichen Einspannung, in der die reflektierende Fläche gedreht oder gefräst wird, eine Anschlagfläche vorzugsweise senkrecht zur Rotationsachse der reflektierenden Flächen abgedreht wird.

20. Verfahren nach Anspruch 17, **dadurch gekennzeichnet, daß** an der Negativform ein Bereich in der Weise abgestochen wird, daß das abgeformte Positiv zumindest einen weiteren Anschlag aufweist.

21. Verfahren nach einem der Ansprüche 17 bis 20, **dadurch gekennzeichnet, daß** für die Abformung mehrerer Formwerkzeuge nebeneinander angeordnet werden, so daß in einem Abformschritt mehrere Koppelvorrichtungen gleichzeitig hergestellt werden können.

22. Verfahren nach einem der Ansprüche 17 bis 21, **dadurch gekennzeichnet, daß** für die Abformung mehrere Formwerkzeuge nebeneinander angeordnet werden, wobei zumindest zwei Formwerkzeuge nicht parallel zueinander angeordnet sind.

23. Verfahren nach einem der Ansprüche 17 bis 22, **dadurch gekennzeichnet, daß** mindestens ein wellenmodifizierendes Element (19) auf der Platte (22) angeordnet wird.

24. Verfahren nach einem der Ansprüche 17 bis 23, **dadurch gekennzeichnet, daß** mindestens zwei Koppelvorrichtungen (20) derart angeordnet werden, daß das von einer Koppelvorrichtung reflektierte Lichtsignal auf die andere Koppelvorrichtung abgebildet wird und daß im Strahlengang zwischen mindestens zwei Koppelvorrichtungen mindestens ein wellenmodifizierendes Element angeordnet wird.

## Claims

1. Optical modifier in which signals of one or more wavelength channels are inserted into or extracted from transmitting and/or receiving elements including, for example, waveguides, with at least two moulded parts comprising each a supporting body (21) as well as at least one coupling device (20) with a curved reflecting surface (8), and a wave-modifying element (19), whereas spacer (23) are provided on the moulded parts and the moulded parts are arranged at two opposite sides of a plate (22) consisting of a material which is transparent for the light signals to be transferred, whereas the lengths of the spacers (23) defining the spacing between the coupling devices (20) and the plate (22).

2. Optical modifier according to claim 1, **characterized in that** a coupling device (20) is developed such that a section through the curved surface (8) approximately corresponds to a portion of a parabola (5), hyperbola or ellipse (10).

3. Optical modifier according to claim 1 or 2, **characterized in that** a coupling device (20) is developed such that the reflecting surface (8) has approximately the shape of a portion of a paraboloid of revolution (5), ellipsoid of revolution (10), or hyperboloid of revolution.

4. Optical modifier according to one of claims 1 to 3, **characterized in that** at least one transmitting or receiving element is provided which transmits electromagnetic waves (3, 4) to the reflecting surface (8) of a coupling device (20), or receives electromagnetic waves (3, 4) from the reflecting surface (8) of a coupling device.

5. Optical modifier according to claim 4, **characterized in that** at least one transmitting or receiving element (9, 11) is arranged near a focal point (B) of the reflecting surface (8) of a coupling device.

6. Optical modifier according to claim 4 or 5, **characterized in that** at least one transmitting or receiving element (9, 11) is a waveguide, preferably a glass fibre.

7. Optical modifier according to one of claims 1 to 6, **characterized in that** at least one stop (7, 12, 13) is provided on a coupling device for aligning a transmitting or receiving element (9, 11).

8. Optical modifier according to claim 7, **characterized in that** the stop (7, 12, 13) is configured such that it allows the alignment of a transmitting and receiving element (9, 11) in two, preferably in three directions substantially perpendicular to one another.

9. Optical modifier according to claim 7 or 8, **characterized in that** the stop (7, 12, 13) is developed integral with the reflecting surface (8) of the coupling device.

10. Optical modifier according to one of claims 1 to 9, **characterized in that** at least one input and output are provided, and at least two coupling devices (20) are arranged such that electromagnetic waves which enter at the input into the optical modifier are firstly reflected at the first coupling device (20), then pass the wave-modifying element (19), and are finally reflected at the second coupling device (20) towards the output.

11. Optical modifier according to one of claims 1 to 10, **characterized in that** a wave-modifying element (19) is a filter.

12. Optical modifier according to claim 11, **characterized in that** the wave-modifying element is a frequency band filter which reflects the electromagnetic waves in at least a specific frequency interval.

13. Optical modifier according to claim 11 or 12, **characterized in that** the wave-modifying element is a frequency band filter which transmits electromagnetic waves with a frequency outside a specific frequency interval.

14. Optical modifier according to claim 12 or 13, **characterized in that** a third coupling device (20) is arranged such that light reflected from the frequency band filter impinges upon the third coupling device.

15. Optical modifier according to claim 14, **characterized in that** the filter is a neutral density filter, colour filter, a polarising filter or an optical diode or an optical isolator.

16. Optical modifier according to one of claims 1 to 15, **characterized in that** a wave-modifying element is a switch, preferably an on/off switch, a reflection/transmission switch, or a selection switch.

17. Method for manufacture of an optical modifier according to one of claims 1 to 16, whereas a reflecting surface (8) is manufactured as part of a surface of revolution with a cone section as generating envelope and whereas at first a reversed mould or a reversed form tool is manufactured **characterised in that** a moulded part is produced comprising a supporting body (21) as well as at least one coupling device (20) arranged thereon and a spacer (23) is provided on the moulded part, whereas two of said moulded parts are arranged at two opposite sides of a plate (22) consisting of a material which is transparent for the light signals to be transferred, and whereas the lengths of the spacers (23) defining the spacing between the coupling devices (20) and the plate (22).

18. Method according to claim 17, **characterized in that** the part of a surface of revolution is manufactured by means of turning or milling, and/or polishing.

19. Method according to claim 18, **characterized in that** in the same clamp in which the reflecting surface is turned or milled, a stop surface is turned preferably perpendicular to the axis of rotation of the reflecting surface.

20. Method according to one of claims 17, **characterized in that** on the negative an area is cut off such that the moulded positive has at least one further stop.

21. Method according to one of claims 17 to 20, **characterized in that** for the moulding, several moulding tools are arranged adjacently so that in one moulding step several coupling devices can be manufactured at the same time.

22. Method according to one of claims 17 to 21, **characterized in that** for the moulding, several moulding tools are arranged adjacently, at least two moulding tools not being arranged parallel to one another.

23. Method according to one of claims 17 to 22, **characterized in that** at least one wave-modifying element (19) is arranged on the plate (22).

24. Method according to one of claims 17 to 23, **characterized in that** at least two coupling devices (20) are arranged such that the light signal reflected from one coupling device is focused on the other coupling device, and that at least one wave-modifying element is arranged in the beam path between at least two coupling devices.

## Revendications

1. Modificateur optique, dans lequel des signaux d'un seul canal de bande de fréquences ou de plusieurs canaux de bande de fréquences sont injectés par couplage dans des éléments d'émission et/ou de réception, incluant par exemple des guides d'onde, ou délivrés par couplage par ceux-ci, au moyen d'au moins deux pièces moulées qui comportent chacune un corps de support (21) ainsi qu'au moins un dispositif de couplage (20) présentant une surface réfléchissante incurvée (8), et un élément modificateur de bande (19), des éléments d'espacement (23) étant disposés sur les pièces moulées et les pièces moulées étant disposées sur deux côtés opposés de part et d'autre d'une plaque (22) qui est en un matériau transparent aux rayons lumineux à transmettre, la longueur des dispositifs d'espacement (23) définissant la distance entre les dispositifs de couplage (20) et la plaque (22).

2. Modificateur optique selon la revendication 1, **caractérisé en ce qu'**un dispositif de couplage (20) est conformé de telle sorte qu'une coupe de la surface incurvée (8) correspond à peu près à une portion de parabole (5), d'hyperbole ou d'ellipse (10).

3. Modificateur optique selon la revendication 1 ou 2, **caractérisé en ce qu'**un dispositif de couplage (20) est conformé de telle sorte que la surface réfléchissante (8) a à peu près la forme d'une portion de paraboloïde de révolution (5), d'ellipsoïde de révolution (10) ou d'hyperboloïde de révolution.

4. Modificateur optique selon l'une des revendications 1 à 3, **caractérisé en ce qu'**il comporte au moins un élément d'émission ou de réception qui émet des ondes électromagnétiques (3, 4) en direction de la surface réfléchissante (8) d'un dispositif de couplage (20) ou qui reçoit des ondes électromagnétiques (3, 4) provenant de la surface réfléchissante (8) d'un dispositif de couplage.

5. Modificateur optique selon la revendication 4, **caractérisé en ce qu'**au moins un élément d'émission ou de réception (9, 11) est disposé à proximité d'un foyer (B) de la surface réfléchissante (8) d'un dispositif de couplage.

6. Modificateur optique selon la revendication 4 ou 5, **caractérisé en ce qu'**au moins un élément d'émission ou de réception (9, 11) est un guide d'onde, avantageusement une fibre de verre.

7. Modificateur optique selon l'une des revendications 1 à 6, **caractérisé en ce qu'**au moins une butée (7, 12, 13) est prévue sur un dispositif de couplage afin de régler un élément d'émission ou de réception (9, 11).

8. Modificateur optique selon la revendication 7, **caractérisé en ce que** la butée (7, 12, 13) est conformée de façon à permettre le réglage d'un élément d'émission et de réception (9, 11) dans deux, avantageusement trois, directions sensiblement perpendiculaires l'une à l'autre.

9. Modificateur optique selon la revendication 7 ou 8, **caractérisé en ce que** la butée (7, 12, 13) est conformée d'une seule pièce avec la surface réfléchissante (8) du dispositif de couplage.

10. Modificateur optique selon l'une des revendications 1 à 9, **caractérisé en ce qu'**il comporte au moins une entrée et une sortie et qu'au moins deux dispositifs de couplage (20) sont disposés de telle sorte que des ondes électromagnétiques qui entrent par une entrée dans le modificateur optique, sont tout d'abord réfléchies par le premier dispositif de couplage (20), puis passent par l'élément modificateur de bande (19) et enfin sont réfléchies en direction de la sortie par le deuxième dispositif de couplage (20).

11. Modificateur optique selon l'une des revendications 1 à 10, **caractérisé en ce qu'**un élément modificateur de bande (19) est un filtre.

12. Modificateur optique selon la revendication 11, **caractérisé en ce que** l'élément modificateur de bande est un filtre à bande de fréquences qui réfléchit des ondes électromagnétiques dans au moins un intervalle de fréquences déterminé.

13. Modificateur optique selon la revendication 11 ou 12, **caractérisé en ce que** l'élément modificateur de bande est un filtre de bande de fréquences qui transmet des ondes électromagnétiques à une fréquence située à l'extérieur d'un intervalle de fréquences déterminé.

14. Modificateur optique selon la revendication 12 ou 13, **caractérisé en ce qu'**un troisième dispositif de couplage (20) est disposé de telle sorte que la lumière réfléchie par le filtre de bande de fréquences est incidente au troisième dispositif de couplage.

15. Modificateur optique selon la revendication 14, **caractérisé en ce que** le filtre est un filtre neutre, un filtre coloré, un filtre de polarisation ou une diode optique respectivement un isolateur optique.

16. Modificateur optique selon l'une des revendications 1 à 15, **caractérisé en ce qu'**un élément modificateur de bande est un commutateur, avantageusement un interrupteur, un commutateur réflexion/transmission ou un commutateur de sélection.

17. Procédé de fabrication d'un modificateur optique selon l'une des revendications 1 à 16, dans lequel une surface réfléchissante (8) est réalisée en tant que partie d'une surface de révolution de section conique sous la forme d'une enveloppante génératrice, et dans lequel on réalise tout d'abord un moule négatif ou un outil de moulage et on fabrique ensuite un dispositif de couplage par moulage, **caractérisé en ce que** l'on réalise une pièce moulée qui comporte un corps de support (21) sur lequel est disposé un dispositif de couplage (20) et **en ce que** des éléments d'espacement (23) sont disposés sur le corps de support (21), deux de ces pièces moulées étant disposées sur deux côtés opposés de part et d'autre d'une plaque (22), la plaque étant en un matériau transparent aux rayons lumineux à transmettre, et la longueur des dispositifs d'espacement (23) définissant la distance entre les dispositifs de couplage (20) et la plaque (22).

18. Procédé selon la revendication 17, **caractérisé en ce que** la partie d'une surface de révolution est réalisée par tournage ou fraisage et/ou polissage.

19. Procédé selon la revendication 18, **caractérisé en ce qu'**une surface de butée est réalisée par tournage, avantageusement perpendiculairement à l'axe de révolution de la surface réfléchissante, pendant la passe pendant laquelle la surface réfléchissante est tournée ou fraisée.

20. Procédé selon la revendication 17, **caractérisé en ce qu'**une région est découpée sur le moule négatif de telle sorte que le positif formé comporte au moins une butée supplémentaire.

21. Procédé selon l'une des revendications de 17 à 20, **caractérisé en ce que** plusieurs outils de moulage sont disposés l'un à côté de l'autre pour effectuer le moulage de sorte que plusieurs dispositifs de couplage peuvent être fabriqués simultanément en une seule étape de moulage.

22. Procédé selon l'une des revendications 17 à 21, **caractérisé en ce que** plusieurs outils de moulage sont disposés l'un à côté de l'autre pour effectuer le moulage, au moins deux outils de moulage n'étant pas disposés parallèlement l'un à l'autre.

23. Procédé selon l'une des revendications 17 à 22, **caractérisé en ce qu'**au moins un élément modificateur de bande (19) est disposé sur la plaque (22).

24. Procédé selon l'une des revendications 17 à 23, **caractérisé en ce qu'**au moins deux dispositifs de couplage (20) sont disposés de telle sorte que le signal lumineux réfléchi par un dispositif de couplage est reproduit sur l'autre dispositif de couplage et **en ce qu'**au moins un élément modificateur de bande est disposé sur le trajet de rayons entre au moins deux dispositifs de couplage.
